# EUROPÄISCHE PATENTSCHRIFT

(11) **EP 0 523 010 B1**
(45) Veröffentlichungstag und Bekanntmachung des Hinweises auf die Patenterteilung: **27.09.1995**
(21) Anmeldenummer: 92810531.1
(22) Anmeldetag: 10.07.1992
(51) Int. Cl.: B28D 1/04, B28D 7/04, B23D 47/02, B23D 45/02

(54) **Schneidmaschine für Werkstücke**
Cutting machine for workpieces
Machine de coupe pour pièces

(30) Priorität: 12.07.1991 CH 2089/91; 24.06.1992 CH 1991/92
(43) Veröffentlichungstag der Anmeldung: 13.01.1993
(73) Patentinhaber: Urs Studer Schleiftechnik, CH-5732 Zetzwil (CH)
(72) Erfinder: Isenschmid, Eduard, CH-8400 Winterthur (CH)
(74) Vertreter: Patentanwälte Breiter + Wiedmer AG

(56) Entgegenhaltungen:
- EP-A- 0 032 383
- WO-A-83/03073
- US-A- 2 464 117

## Beschreibung

Die Erfindung bezieht sich auf eine Schneidmaschine für Werkstücke mit wenigstens einer ebenen Fläche, welche Schneidmaschine ein Maschinengestell, eine an einem kippbaren Führungsrahmen geführte, motorisch angetriebene Trennscheibe, einen zweiteiligen Auflagetisch für das Werkstück mit einem durch die Kippbewegung des Führungsrahmens um eine in horizontaler Richtung verschiebbare, parallel zur Ebene der Trennscheibe verlaufende Achse schwenkbaren Teil und eine Arretiervorrichtung für die Kipp- bzw. Schwenkbewegung umfasst.

Es sind bereits verschiedene Vorrichtungen bekannt, welche dazu dienen, Werkstücke auch in einem anderen als einem rechten Winkel zuzuschneiden. In der Praxis liegen die Werkstücke meist als Platten, Tafeln oder dgl. vor, wobei für spezielle Fälle wenigstens eine Seite auf Gehrung zu schneiden ist. Das Schneidgut ist in der Regel keramischer oder mineralischer Natur, beispielsweise aus Naturstein oder Kunststein, aber es besteht auch aus Glas, Kunststoff, Holz oder einem Metall.

In der EP-B1 0032383 wird eine Trennmaschine für Werkstücke, insbesondere Platten, Tafeln und andere Körper, beschrieben, welche eine an einem kippbaren Führungsrahmen geführte Trennscheibe und einen das Werkstück aufnehmenden, auf einem Maschinengestell abgestützten Auflagetisch umfasst. Der Auflagetisch besteht aus zwei entlang einer parallel zum Führungsrahmen verlaufenden Achse gelenkig miteinander verbundenen Teilen. Das erste Teil ist starr am Führungsrahmen befestigt und das auch schwenkbare zweite Teil bei gekipptem Führungsrahmen am Maschinengestell arretierbar. Der Führungsrahmen besteht aus einem im untersten Bereich in einem Drehlager gehalterten, U-förmigen Teil und aus einer die Enden der parallelen Schenkel verbindenden horizontalen Gleitführung. An dieser querschnittlich rechteckigen Gleitführung ist eine von einem Support gehaltene, einen Antriebsmotor aufweisende Kreissäge mit einer als Kreissägeblatt ausgebildeten Trennscheibe hin- und herverschieblich. Nach einer Variante ist die Trennscheibe bezüglich des Werkstücks mittels einer im Querschnitt ebenfalls rechteckigen Leiste höhenverstellbar. Diese Leiste ist von einer Manschette umgriffen, welche fest mit dem auf der Gleitführung horizontal verschieblichen Support verbunden ist.

Alle bekannten Führungssysteme für Schneidmaschinen haben auch den Nachteil, dass man sie wegen des stets auftretenden feinkörnigen Schneidstaubes sehr häufig reinigen muss, sonst werden sie schwergängig und verklemmen schliesslich. Dies konnte bisher, abgesehen von zusätzlicher Reinigungsarbeit, nur gegen Inkaufnahme von etwas Spiel verhindert werden, was sich jedoch zulasten der Präzision der Schneidmaschine auswirkt.

Der vorliegenden Erfindung liegt die Aufgabe zugrunde, eine Schneidmaschine der eingangs genannten Art zu schaffen, mit welcher die Nachteile der erwähnten EP-B1 0032383, das Verklemmen der abgetrennten keilförmigen Werkstückteile und die indirekte Arretierung der Trennscheibe, zu beheben, ohne dass Arbeitskomfort und Wirtschaftlichkeit beeinträchtigt werden. Weiter soll die Schneidmaschine spielfrei ausgestaltbar sein, grossen Drehmomenten widerstehen und ohne Reinigungsarbeit auch bei langer Betriebsdauer leichtgängig bleiben.

Die Aufgabe wird erfindungsgemäss dadurch gelöst, dass der zwischen Trennscheibe und Führungsrahmen liegende Teil des Auflagetischs fest montiert und bei horizontaler Lage des schwenkbaren Teils mit diesem flächenbündig ist, wobei die Hebestreben in Horizontallage beidends der Stirnseiten des festen Teils des Auflagetischs liegen, und die Arretiervorrichtung den Führungsrahmen am Maschinengestell fixiert. Bevorzugte und weiterbildende Ausführungsformen der Erfindung sind Gegenstand von abhängigen Patentansprüchen.

Beide Teile des Auflagetischs bestehen vorzugsweise aus einem metallischen Rost und haben zweckmässig eine Gleitschutzbeschichtung und/oder skalierte Anschlagsleisten für die Werkstücke.

Die Trennscheibe ist im wesentlichen ein mit sehr hartem Werkstoff bestücktes Kreissägeblatt, welches im Zusammenwirken mit einer Kühlflüssigkeit arbeitet. Diese wird in einer im Maschinengestell angeordneten Wanne gesammelt und über eine Grobreinigung rückgeführt. Diese Bestandteile sind, wie das Maschinengestell, nicht Gegenstand der eigentlichen Erfindung, sondern werden in einer dem Fachmann geläufigen Ausführungsform verwendet.

Beim Schwenken des in bezug auf die Trennscheibe vom Führungsrahmen abgewandten Teils des Auflagetischs bleibt der andere, zwischen der Trennscheibe und dem Führungsrahmen liegende feste Teil des Auflagetischs an Ort, also horizontal. In Richtung der Trennscheibe wird eine Stufe gebildet.

Beim Zuschneiden von Werkstücken, beispielsweise Platten, werden diese in der Praxis vorerst rechtwinklig, erst dann auf Gehrung geschnitten. Dank der beim Schneiden auf Gehrung gebildeten Stufe zwischen den beiden Teilen des Auflagetischs können die abgetrennten, keilförmigen Stücke nicht wie bei der EP-P1 0032383 verklemmen, sondern fallen auf den ortfesten, horizontalen Teil des Auflagetischs hinunter. Es muss also nicht mehr nach jedem Schnitt ein keilförmiges Stück mühsam aus einem abgewinkelten Auflagetisch geklaubt werden, sondern die Abfälle können am Schluss des Schneidvorgangs gesamthaft entfernt werden.

Weiter hat die Ausbildung eines ortfesten Teils des Auflagetischs noch den Vorteil, dass dieser beim Einstellen der Maschine zum Schnitt auf Gehrung nicht angehoben werden muss, was bei den meist manuellen Vorrichtungen eine Verbesserung des Arbeitskomforts bedeutet.

Schliesslich ist die ganze Schneidevorrichtung stabiler, wenn ein Teil des Auflagetischs fest montiert statt auch schwenkbar ausgebildet ist. Der zwischen der Trennscheibe und dem Führungsrahmen angeordnete Teil des Auflagetischs hat in der gemäss dem Stand der Technik nach oben geschwenkten Position nicht nur keine Funktion, sondern verhindert ein Nachuntenfallen der abgetrennten, keilförmigen Stücke.

Die gelenkige Verbindung zwischen den Hebestreben und dem schwenkbaren Teil des Auflagetischs, in der Praxis vorzugsweise als Scharniere ausgebildet, beschreiben bei der Kipp- bzw. Schwenkbewegung eine kreisförmige Bahn. Der schwenkbare Teil des Auflagetischs muss deshalb in Richtung der Trennschreibe nachgezogen werden. Es entspricht einer technischen Notwendigkeit, dass die Achse des schwenkbaren Teils des Auflagetischs gleichzeitig mit der Schwenkbewegung eine horizontale Verschiebebewegung macht. Dabei bleibt die Achse stets in einer Parallelebene zur Ebene der Trennscheibe. Die technische Lösung dieses Problems, ist an sich bekannt, als zweckmässigste Lösung bieten sich horizontale Führungsschlitze oder horizontal gleitende oder rollende Schlitten an.

Die bevorzugt als Vierkantrohre ausgebildeten Hebestreben sind in an sich bekannter Weise starr mit dem Führungsrahmen verbunden, beispielsweise durch Schweissen, Verschrauben, Ein- oder Aufstecken, im letzteren Fall mit einem Sicherungsbolzen.

Für reproduzierbare, spielfreie Schnitte ist es notwendig, die Arretiervorrichtung direkt auf den Führungsrahmen, welcher die Trennschreibe und deren Antrieb trägt, einwirken zu lassen. Keine indirekt einwirkende Arretiervorrichtung, beispielsweise am schwenkbaren Teil des Hebetischs, kann einen vergleichbar exakt reproduzierbaren, spielfreien Schnitt gewährleisten.

Nach einer bevorzugten Ausführungsform einer Arretiervorrichtung weist der Führungsrahmen an geeigneter Stelle eine Bohrung mit einem Innengewinde auf. In diese ist eine Arretierschraube eingeführt, welche einen Führungsschlitz einer starr am Maschinengestell befestigten Platte durchgreift. Die Schraube kann mit an sich bekannten Mitteln angezogen werden, indem der Schraubenkopf als Sechskant ausgebildet ist, einen Schlitz oder ein Imbusloch aufweist. Mechanische Hilfsmittel zum Anziehen und Lösen sind nicht notwendig, wenn der Schraubenkopf z.B. als Flügelmutter, Knebelschraube oder Kreuzgriff ausgebildet ist.

Bei Schneidmaschinen mit höherem Bedienungskomfort kann die Kippbewegung des Führungsrahmens steuerbar motorisch erfolgen, beispielsweise mittels eines Linear- oder Schrittmotors, welcher Motor programmgesteuert sein kann.

Vorzugsweise ist die Achse des schwenkbaren Teils des Auflagetischs aushängbar, dies insbesondere zur Reinigung einer unterhalb des Auflagetischs angeordneten Wanne zum Auffangen der Kühlflüssigkeit von Vorteil. In diese Wanne gelangt auch das Schneidstaub und andere, unerwünschte Stücke, weshalb sie von Zeit zu Zeit gereinigt werden muss.

Das Absenken der Trennscheibe erfolgt zweckmässig nicht mit einer Schwenkbewegung, sondern mit einer geführten Linearbewegung. Bei einer Schwenkbewegung muss ein zu langer Hebelarm oder eine zu geringe Absenkdistanz in Kauf genommen werden.Der Führungsrahmen hat deshalb bevorzugt zwei parallel zur Ebene der Trennscheibe in Abstand verlaufende Absenkführungsrohre. Besonders vorteilhaft werden diese Höhenverschiebungsrohre in der Längsmittelebene der längslaufenden Führungsrohre angeordnet.

Zur spielfreien Führung bei grossen Drehmomenten sind die Führungsrohre in bezug auf ihren Querschnitt vorzugsweise auf zwei gegenüberliegenden Seiten, horizontale Führungsrohre in Richtung der Ebene der Trennscheibe und vertikale Führungsrohre in Richtung der Antriebswelle der Trennscheibe, rund ausgebildet, wobei der Abstand der beiden Scheitel grösser ist als der grösste Durchmesser der Rundungen, und Führungsrollen paarweise mit einem Axialwinkel von 60 bis 120° in bezug auf die Längsmittelebene symmetrisch und tangential auf den Rundungen der Führungsrollen spielfrei aufliegen.

In der Praxis sind die Rundungen der Führungsrohre zweckmässig querschnittlich halbkreisförmig, mit einem Radius r, ausgebildet. Dabei gehen die beiden halbkreisförmigen Rundungen der Führungsrohre bevorzugt in zwei parallele, ebene Seitenflächen über. Dadurch werden die Führungsrohre im Querschnitt vorzugsweise rechteckig, mit an den Schmalseiten angesetzten Halbkreisen mit gleichen Radien. Derartige Rohre werden hier einfachheitshalber als Ovalrohre bezeichnet.

Vorzugsweise entspricht der Abstand a der Scheitel eines Führungsrohrs wenigstens dem doppelten grössten Durchmesser 2r der Rundungen, bei halbkreisförmigen Rundungen schneiden oder berühren sich die beiden vollständig gezeichneten Kreise nicht mehr, weil der Abstand a grösser als 4r ist. Derartige Rohre entsprechen nicht nur der Erfindung in idealer Weise, auch die mechanische Stabilität der Führungsrohre ist in hohem Masse gewährleistet.

Die mechanische Festigkeit kann weiter erhöht werden, indem Führungsrohre mit innenliegenden Verstärkungsstegen stranggepresst werden. Auch kann im Bereich der Auflageflächen der Führungsrollen die Wandstärke des Führungsrohrs vergrössert, und/oder die äussere Oberfläche in an sich bekannter Weise gehärtet und/oder mit einem harten, verschleissfesten Werkstoff beschichtet sein.

Nach einer weiteren bevorzugten Ausführungsform der Erfindung besteht das Führungsrohr aus zwei Rundrohren mit einem Verbindungssteg. Dieser Verbindungssteg kann ein einfaches Blech, ein Profil oder ein Rohr sein.

Nach einer besonders bevorzugten Ausführungsform umfasst die Schneidmaschine paarweise in Abstand parallel angeordnete horizontale und/oder vertikale Führungsrohre. Diese sind in der Praxis etwa 5 bis 15 cm voneinander entfernt, zweckmässig etwa 10 cm. Dank dieser Ausführungsform kann das auf die Führungsrohre ausgeübte Drehmoment besser verteilt und aufgefangen werden, die auf ein Führungsrohr einwirkenden Hebelkräfte sind wegen des grösseren Abstands der Druckeinwirkung geringer.

Bei paarweise angeordenten Führungsrohren kann eines der beiden Paare von Führungsrollen durch eine einzelne, in der von der Längsmittelebene gebildeten Symmetrieebene angeordnete Führungsrolle ersetzt sein. Die einwirkenden Drehmomente werden, verglichen mit einem Einzelrohr, in grösserem Abstand von zwei Führungsrohren aufgenommen, weshalb pro Führungsrohr ein Rollenpaar genügt. Die beiden Paare von Führungsrollen der benachbarten Führungsrohre können auf der gleichen Ebene oder diagonal gegenüberliegend angeordnet sein.

Der Führungsrahmen mit den Führungsrohren kann fest am Maschinengestell befestigt sein oder bevorzugt über eine Achse geschwenkt werden.

Die verwendeten Führungsrollen sind in der Regel zylinderförmig ausgebildet, die Laufflächen können jedoch auch nach innen oder nach aussen bombiert (konkav oder konvex) ausgebildet sein.

Die erfindungsgemässe Schneidmaschine hat in Betriebsstellung für Schnitte auf Gehrung eine abgestufte Auflagefläche, die abgeschnittenen Keile fallen herunter und müssen erst am Schluss entfernt werden. Die Arretiervorrichtung für die Trennscheibe am Führungsrahmen ist präzis einstellbar und spielfrei. Die Schneidmaschine kann mit einem Führungsrahmen hergestellt werden, welcher mechanisch stabile horizontale und vertikale Führungsrohre aufweist, die weiter
- wegen ihrer speziellen Gestaltung spielfrei aufliegende Führungsrollen haben, welche ein grosses Drehmoment aufnehmen können, insbesondere in Form von paarweise angeordneten Führungsrohren,
- auch bei langem Betrieb eine leichtgängige horizontale und vertikale Verschiebung der Trennscheibe erlauben, ohne dass eine Reinigung notwendig ist. Dank der runden Ausbildung der Führungsrohre rieselt feinkörniger Schneidstaub kontinuierlich ab und behindert den Betrieb nicht.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 eine stilisierte Ansicht einer Schneidmaschine, Stellung für vertikale Schnitte,
- Fig. 2 eine Schneidmaschine gemäss Fig. 1, Stellung für Schnitte auf Gehrung,
- Fig. 3 eine Arretiervorrichtung für den Führungsrahmen,
- Fig. 4 eine perspektivische Darstellung des funktionellen Teils einer Schneidmaschine,
- Fig. 5 eine teilweise Seitenansicht V gemäss Fig. 4,
- Fig. 6 eine teilweise Ansicht VI gemäss Fig. 4,
- Fig. 7 eine teilweise Draufsiht VII gemäss Fig 4,
- Fig. 8 einen Querschnitt durch ein ovales Führungsrohr, mit Führungsrollen, und
- Fig. 9 eine Variante eines Führungsrohrs nach Fig. 8, mit Führungsrollen.

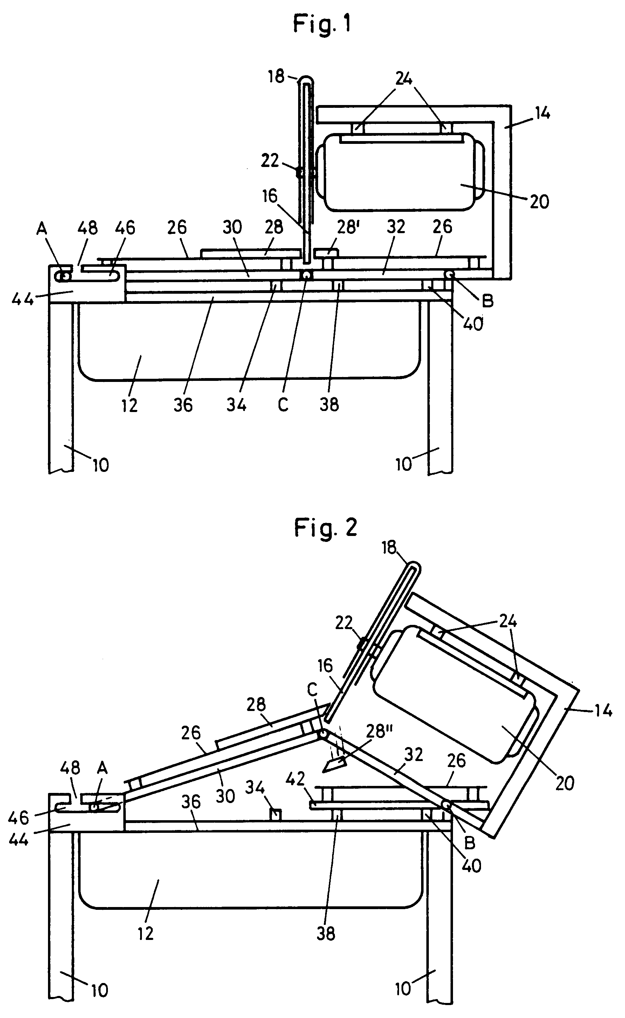

Die Schneidmaschine gemäss den Fig. 1, 2 umfasst als tragenden Bauteil ein Maschinengestell 10, von welchem lediglich die Beine sichtbar sind. Diese können, wie dargestellt, vertikal, aber auch schräg nach aussen verlaufend ausgestaltet sein. Im oberen Bereich des Maschinengestells 10 ist eine Auffangwanne 12 für die Kühlflüssigkeit ersichtlich. Ein um eine längslaufende Achse B schwenkbarer Führungsrahmen 14 trägt eine Trennscheibe 16, welche mit einer Abdeckhaube 18 geschützt ist.

Am Führungsrahmen 14 ist ein Antriebsmotor 20 aufgehängt, welcher die Trennscheibe 16 über eine Antriebswelle 22 in Rotation versetzt.

Der Antriebsmotor 20 und damit die Trennscheibe 16 ist im Führungsrahmen 14 in Arbeitsrichtung, also vertikal zur Zeichnungsebene, verschiebbar. Die Führungsprofile 24 sind angedeutet, sie können in jeder an sich bekannten Ausführungsform ausgebildet sein.

Aus den Fig. 1, 2 ist nicht ersichtlich, dass die Trennscheibe 16 auch höhenverstellbar sein kann. Dies erfolgt ebenfalls in an sich bekannter Weise.

Auf dem nach Fig. 1 durchgehend horizontalen Auflagetisch 26 der Schneidmaschine liegt ein Werkstück 28, eine Platte, welche vertikal auf ein bestimmtes Mass geschnitten wird. Der Abschnitt 28' des Werkstücks ist bereits teilweise abgetrennt. Der schwenkbare Teil 30 des Auflagetischs 26 ist über eine längslaufende Achse C mit zwei stirnseitigen Hebestreben 32 verbunden, welche ihrerseits stärr rechtwinklig abkragend am Führungsrahmen 14 festgelegt sind.

Der schwenkbare Teil 30 des Auflagetischs 26 liegt in der Position gemäss Fig. 1 über einen höhenverstellbaren Stützfuss 34 auf einer Verbindungsleiste 36 des Maschinenrahmens 10 auf.

Zwischen der Trennscheibe 16 und dem Vertikalträger des Führungsrahmens 14 sind in Fig. 1 die Stützfüsse 38, 40 des von der Hebestrebe 32 verdeckten festen Teils 42 (Fig. 2) des Auflagetischs 26 sichtbar.

An der Verbindungsleiste 36 ist eine Platte 44 mit einem horizontalen Führungsschlitz 46 für die Achse A des schwenkbaren Teils 30 des Auflagetischs 26 befestigt. Es sind keine Mittel zum Festklemmen der Achse A im Führungsschlitz 46 vorgesehen.

In der Position gemäss Fig.2 ist der Führungsrahmen 14 um die Achse B gekippt. Dabei haben die Hebestreben 32 über die Scharniere C den schwenkbaren Teil 30 des Auflagetischs 26 angehoben. Die Achse A hat sich dabei entlang des horizontalen Führungsschlitzes 46 verschoben.

Aus Fig. 2 ist gut ersichtlich, dass der gestellfeste Teil 42 des Auflagetischs 26 trotz der Kippbewegung des Führungsrahmens 14 an Ort und Stelle bleibt.

Aus Fig. 2 ist weiter ein abgeschnittener, herunterfallender Keil 28'' des Werkstücks 28 sichtbar. Die abgeschnittenen Keile 28''können sich auf dem festen Teil 42 des horizontalen Auflagetischs 26 sammeln, ohne den Schneidevorgang zu behindern oder nach jedem Schnitt zusätzliche Entfernungsarbeit erforderlich zu machen. Dies ist nur möglich, weil der Auflagetisch 26 abgestuft, nicht abgewinkelt (EP-B1 0032383), ist.

In der Platte 44 ist ein vom horizontalen Führungsschlitz 46 ausgehender Vertikalschlitz 48 angedeutet. Bei horizontaler oder nahezu horizontaler Lage des schwenkbaren Teils 30 des Auflagetischs 26 kann die Achse A aus dem horizontalen Führungsschlitz 46 gehoben werden.

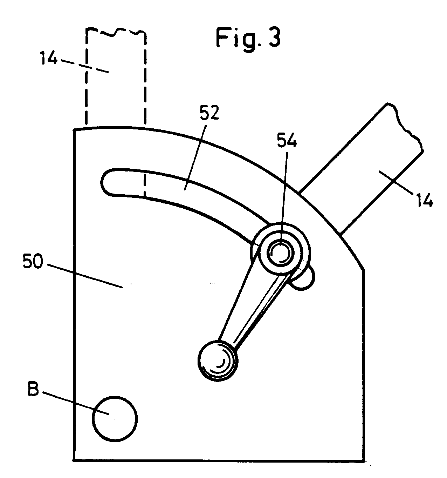

In Fig. 3 ist eine starr am Maschinenrahmen 10 (Fig.1, 2) befestigte Klemmplatte 50 mit einem kreissegmentförmig verlaufenden Führungsschlitz 52 dargestellt. An dieser Klemmplatte 50 wird die Vertikalstrebe des Führungsrahmens 14 mittels einer Knebelschraube 54 fixiert. Die Vertikallage des Führungsrahmens 14 ist gestrichelt angedeutet.

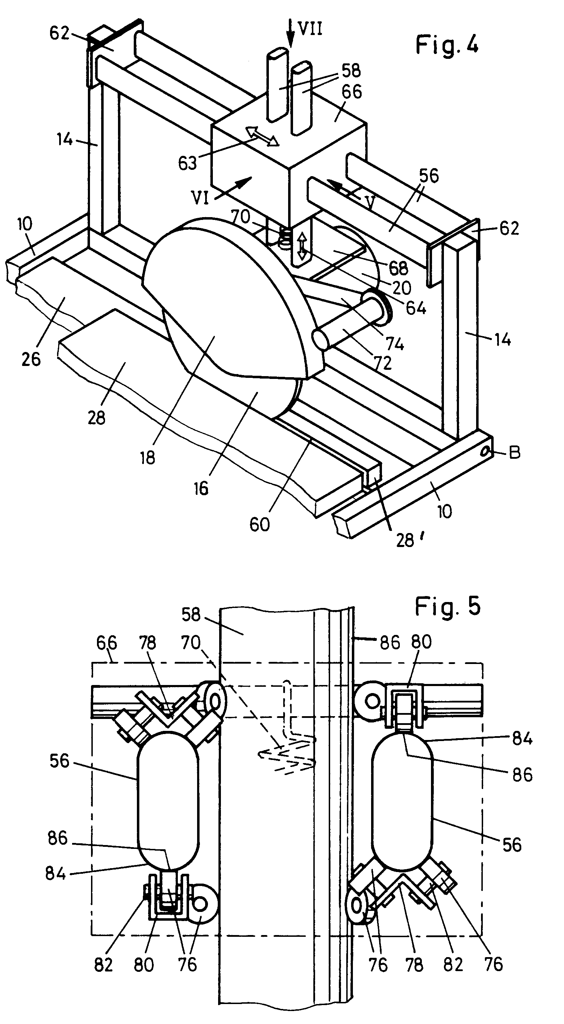

Der in Fig. 4 dargestellte funktionelle Teil einer Schneidmaschine umfasst im wesentlichen das Maschinengestell 10 mit einem Auflagetisch 26 für ein Werkstück 28 und den um eine Achse B schwenkbaren Führungsrahmen 14 mit der Trennscheibe 16. Mit einem rechtwinkligen Schnitt 60 ist ein Teil 28′ des Werkstücks 28 teilweise abgetrennt.

Der Führungsrahmen 14 besteht aus einem U-förmigen Rechteckrohr mit der Schwenkachse B im unteren Bereich. An beiden abkragenden Schenkeln des Führungsrahmens 14 sind Halterungsplatten 62 für ein Paar von horizontalen, in Richtung der Ebene der Trennscheibe 16 beidseits abgerundeten Führungsrohre 56, welche parallel verlaufen. Entlang dieser Führungsrohre 56 ist ein in den folgenden Figuren im Detail dargestellter, arretierbarer Support 66, quaderförmig stilisiert, verschiebbar. Mit einem Doppelpfeil 63 ist angedeutet, dass das Support 66 auf den horizontalen Führungsrohren 56 hin- und herschiebbar ist, mit einem Doppelpfeil 64, dass die vertikalen Führungsrohre 58 heb- und senkbar sind.

Aus dem Support 66 ragen oben und unten zwei in Abstand parallel verlaufende vertikale Führungsrohre 58 heraus, welche ebenfalls oval ausgebildet sind und in Richtung der Antriebswelle 22 (Fig. 1, 2) der Trennscheibe 16 abgerundet sind. Die höhenverschiebbaren Führungsrohre 58 sind an einer horizontalen Tragplatte 68 befestigt, welche ihrerseits einen Antriebsmotor 20 mit einer nicht sichtbaren Antriebswelle (22 in Fig. 1, 2) für die Trennscheibe 16 und eine Abdeckhaube 18 für die Trennscheibe 16 haltert.

Eine Zugfeder ist als Spiralfeder 70 ausgebildetet, welche die Trennscheibe 16 mit Schutz- und Antriebsvorrichtung, samt den Führungsrohren 58, zu heben vermag. Das Absenken der Trennscheibe erfolgt durch manuelle Kraftanwendung über einen Handgriff 72 an einem Hebel 74, welcher im Führungsrahmen 14 schwenkbar gelagert ist und die Kraft auf die Führungsplatte 68 überträgt. Auch die vertikalen Führungsrohre 58 sind arretierbar.

In Fig. 5 bis 7 sind die in Fig. 4 nicht sichtbaren Führungsrollen 76 dargestellt, welche am in Fig. 5 angedeuteten Support 66 befestigt sind. Diese Befestigung erfolgt im Falle von paarweise angeordneten Führungsrollen 76 über ein Winkelprofilstück 78, bei Einzelrollen über ein U-förmiges Profilstück 80. Die Achsen 82 von Rollenpaaren 76 bilden einen rechten Winkel.

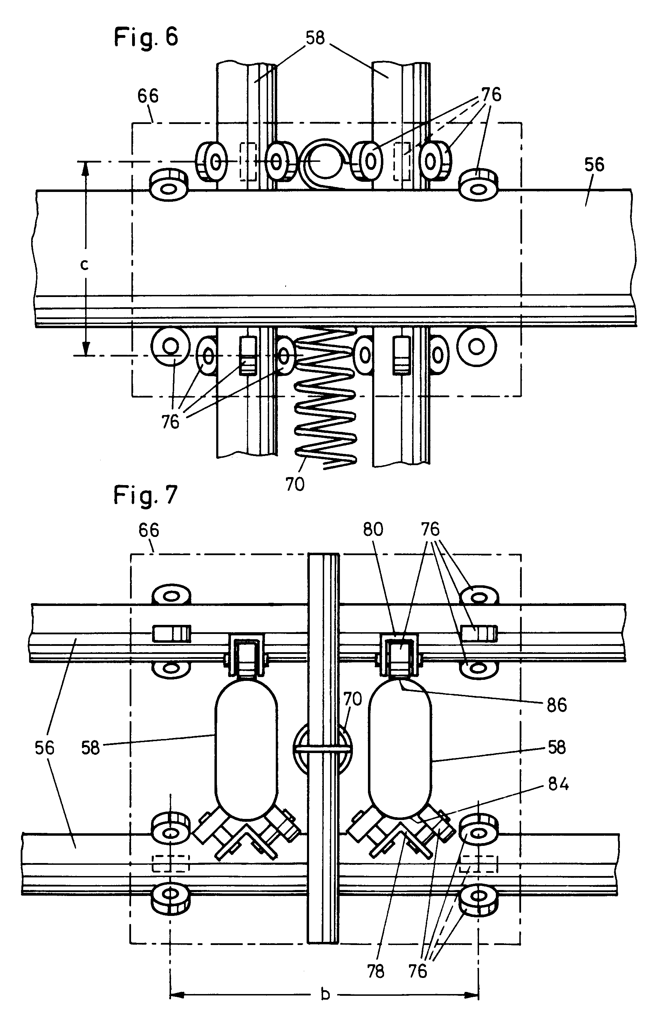

Aus Fig. 5 geht hervor, dass-die Führungsrollen 76 des einen horizontalen Führungsrohrs 56 oben paarweise ausgebildet sind, beim andern horizontalen Führungsrohr 56 unten. An der andern, im vorliegenden Fall halbkreisförmigen Rundung 84 der horizontalen Profilrohre 56 liegt am betreffenden Scheitel 86 der Führungsrohre 56 eine einzelne Führungsrolle 76 auf. Wie aus Fig. 7 ersehen werden kann, sind die Rollensätze an den horizontalen Führungsrohren 56 im Abstand b doppelt ausgeführt.

Die in Fig. 5 lediglich angedeutete Spiralfeder 70 ist in den Fig. 6 und 7 im Detail dargestellt.

Fig. 7 zeigt die Rollensätze von vertikalen Führungsrohren 58 mit Führungsrollen 76, Winkelstücken 78, U-förmigen Profilstücken 80 und Achsen 82 der Führungsrollen 76. Bei beiden vertikalen Führungsrohren 58 liegt auf der einen Seite eine einzelne Führungsrolle 76 im Scheitel 86 auf der Rundung 84 auf, auf der andern Rundung 84 der vertikalen Führungsrohre 58 liegen abgewinkelte Rollenpaare 76 auf. Aus Fig. 6 ist ersichtlich, dass auch an den vertikalen Führungsrohren 58 zwei Rollensätze angeordnet sind, welche einen Abstand c haben.

Selbstverständlich können nach nicht dargestellten Varianten an beiden Rundungen 84 eines Führungsrohrs 56, 58 Rollenpaare 76 angeordnet sein, an jedem Führungsrohr muss also wenigstens ein Rollenpaar aufliegen. Bei allen Führungsrohren 56, 58 können Rollensätze mit einer einzelnen Führungsrolle 42 nach Fig. 5 oder 7 angeordnet sein, bei den in Abstand b oder c angeordneten Rollensätzen gleich oder unterschiedlich.

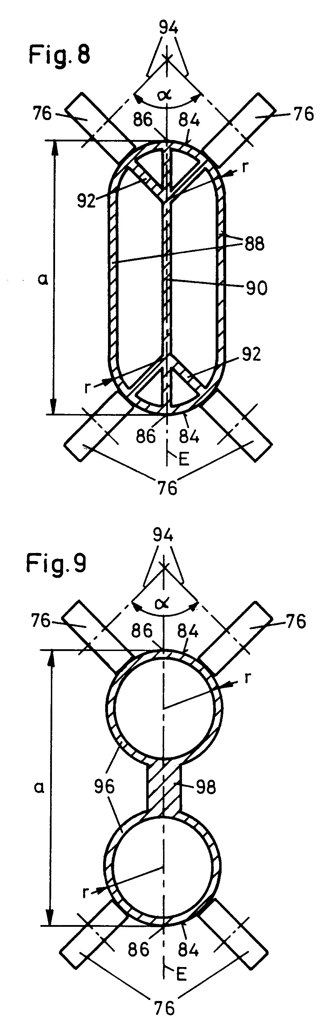

Fig. 8 zeigt ein Führungsrohr 56, 58 mit halbkreisförmigen Rundungen 84 und parallelen ebenen Verbindungsflächen 88. Die beiden Scheitel 86 des Führungsrohrs 56, 58 haben einen Abstand a, welcher grösser als der doppelte Durchmesser 2r einer Rundung 84 ist. In der Längsmittelachse E, einer Symmetrieebene, ist ein Verstärkungssteg 90 ausgebildet, weitere Verstärkungsstege 92 stützen die Auflageflächen der Führungsrollen 76. Bei einer Ausbildung von Einzelrollen 76 (Fig. 5 bis 7) ist auch dieser Auflagebereich, der Scheitel 86, durch den Verstärkungssteg 90 gestützt.

Die verlängerten Rollenachsen 94 bilden einen Winkel α von 90°. Der Abstand der Rollenachsen 94 von der Rundung 84 ist einstellbar. So können weiter nicht hindernde Verschleisserscheinungen korrigiert werden.

Nach der Ausführungsform gemäss Fig. 9 sind die Führungsrohre 56, 58 als Doppelrohr ausgebildet, mit zwei im Querschnitt kreisförmigen Rohren 96, welche mit einem versteifenden Verbindungsprofil 98 in einem Abstand a der Scheitel 86 gehalten werden. Auch diese Ausführungsform weist verglichen mit einem ovalen Führungsrohr 56, 58 gemäss Fig. 5 bis 7 eine erhöhte mechanische Festigkeit auf.

Führungsrollen 76 und Führungsrohre 56, 58 bestehen aus an sich bekannten, verschleissfesten Werkstoffen, die eine hinreichende mechanische Festigkeit haben, z.B. aus Stahl oder einer hochfesten Aluminiumlegierung, aber auch einem geeigneten Kunststoff, z.B. aus Polyäthylen.

## Patentansprüche

1. Schneidmaschine für Werkstücke (28) mit wenigstens einer ebenen Fläche, welche Schneidmaschine ein Maschinengestell (10), eine an einem kippbaren Führungsrahmen (14) geführte, motorisch angetriebene Trennscheibe (16), einen zweiteiligen Auflagetisch (26) für das Werkstück (28) mit einem durch die Kippbewegung des Führungsrahmens (14) um eine in horizontaler Richtung verschiebbare, parallel zur Ebene der Trennscheibe (16) verlaufende Achse (A) schwenkbaren Teil (30) und eine Arretiervorrichtung für die Kipp- bzw. Schwenkbewegung umfasst, wobei die Kippbewegung des Führungsrahmens (14) über zwei von diesem starr senkrecht abkragende, mit dem schwenkbaren Teil (30) des Auflagetischs (26) gelenkig verbundende Hebestreben (32) übertragbar ist,
dadurch gekennzeichnet, dass
der zwischen Trennscheibe (16) und Führungsrahmen (14) liegende Teil (42) des Auflagetischs (26) fest montiert und bei horizontaler Lage des schwenkbaren Teils (30) mit diesem flächenbündig ist, wobei die Hebestreben (32) in Horizontallage beidends der Stirnseiten des festen Teils (42) des Auflagetischs (26) liegen, und die Arretiervorrichtung den Führungsrahmen (14) am Maschinengestell (10) fixiert.

2. Schneidmaschine nach Anspruch 1, dadurch gekennzeichnet, dass die Achse (A) des schwenkbaren Teils (30) des Auflagetischs (26) in horizontalen Führungsschlitzen (46), auf horizontal gleitenden oder rollenden Schlitten oder dgl. verschiebbar ist, wobei die Achse (A) stets in einer Parallelebene zur Ebene der Trennscheibe (16) liegt.

3. Schneidmaschine nach Anspruch 1 oder 2, dadurch gekennzeichnet, dass die Hebestreben (32) zum Übertragen der Kippbewegung mit dem Führungsrahmen (14) verschweisst, mit diesem verschraubt, auf oder in diesen gesteckt und vorzugsweise als Vierkantrohre ausgebildet sind.

4. Schneidmaschine nach einem der Ansprüche 1 bis 3, dadurch gekennzeichnet, dass die Arretiervorrichtung aus einer am Maschinengestell (10) starr befestigten Klemmplatte (50) mit einem Führungsschlitz (52) für eine in eine Gewindebohrung im Führungsrahmen (14) gedrehte Schraube (54) besteht.

5. Schneidmaschine nach einem der Ansprüche 1 bis 4, dadurch gekennzeichnet, dass der Führungsrahmen (14) mittels eines vorzugsweise programmgesteuerten Linear-oder Schrittmotors kippbar ist.

6. Schneidmaschine nach einem der Ansprüche 1 bis 5, dadurch gekennzeichnet, dass die Achse (A) des schwenkbaren Teils (30) des Auflagetischs (26) aushängbar ist.

7. Schneidmaschine nach einem der Ansprüche 1 bis 6, dadurch gekennzeichnet, dass der schwenkbare Teil (30) des Auflagetisches (26) über einen höhenverstellbaren Stützfuss (34) auf einer Verbindungsleiste (36) des Maschinenrahmens (10) aufliegt.

8. Schneidmaschine nach einem der Ansprüche 1 bis 7, dadurch gekennzeichnet, dass die Führungsrohre (56, 58) in bezug auf ihren querschnitt auf zwei gegenüberliegenden Seiten, horizontale Führungsrohre (56) in Richtung der Ebene der Trennscheibe (16) und vertikale Führungsrohre (58) in Richtung der Antriebswelle (22) der Trennscheibe (16), rund ausgebildet sind, wobei der Abstand (a) der beiden Scheitel (86) grösser ist als der grösste Durchmesser (2r) der Rundungen (84), und Führungsrollen (76) paarweise mit einem Axialwinkel (α) von 60 - 120°, vorzugsweise etwa 90°, in bezug auf die Längsmittelebene (E) symmetrisch und tangential auf den Rundungen (84) der Führungsrohre (56, 58) spielfrei aufliegen.

9. Schneidmaschine nach Anspruch 8, dadurch gekennzeichnet, dass die Rundungen (84) der Führungsrohre (56, 58) querschnittlich halbkreisförmig, mit einem Radius (r), ausgebildet sind, und die beiden Rundungen (84) der Führungsrohre (56, 58)vorzugsweise in zwei parallele, ebene Seitenflächen (88) übergehen.

10. Schneidmaschine nach Anspruch 8 oder 9, dadurch gekennzeichnet, dass der Abstand (a) der Scheitel (86) wenigstens dem doppelten grössten Durchmesser (2r) der Rundungen (84) entspricht.

11. Schneidmaschine nach einem der Ansprüche 8 bis 10, dadurch gekennzeichnet, dass die Führungsrohre (56, 58) innenliegende Verstärkungsstege (90, 92) haben oder aus zwei im Querschnitt kreisförmigen Rohren (96) mit einem Verbindungsprofil (98) bestehen.

12. Schneidmaschine nach einem der Ansprüche 8 bis 11, dadurch gekennzeichnet, dass die horizontalen und/oder vertikalen Führungsrohre (56, 58) paarweise angeordnet sind, wobei vorzugsweise eines der beiden Paare von Führungsrollen (76) eines Rollensatzes durch eine einzelne, in der Längsmittelebene (E) angeordnete Führungsrolle (76) ersetzt ist.

## Claims

1. Cutting machine for workpieces (28) with at least one flat surface, where the said cutting machine comprises a machine frame (10), a motor-driven cutting disc (16) guided on a tilting guide frame (14) , a two-part support table (26) for the workpiece (28) with a part (30) which can swivel under the tilting movement of the guide frame (14) about an axis (A) running parallel to the plane of the cutting disc (16) and being displaceable in a horizontal direction, and a locking device for the tilting or swivelling movement, where the tilting movement of the guide frame (14) can be transferred via two lifting struts (32) projecting rigidly perpendicularly from this and connected by hinges to the swivelling part (30) of the support table (26),
characterised in that
a part (42) of the support table (26) is firmly mounted and lies between the cutting disc (16) and the guide frame (14), flush with the swivelling part (30), when this is in a horizontal position, where the lifting struts (32) in the horizontal position lie at both ends of the fixed part (42) of the support table (26), and the locking device fixes the guide frame (14) to the machine frame (10).

2. Cutting machine according to Claim 1, characterised in that the axis (A) of the swivelling part (30) of the support table (26) can be displaced on carriages or similar, sliding or rolling horizontally in horizontal guide slots (46), where the axis (A) always lies in a plane parallel to the plane of the cutting disc (16).

3. Cutting machine according to Claim 1 or Claim 2, characterised in that the lifting struts (32) for transferring the tilting movement are either welded to the guide frame (14), screwed to this, placed on or in this, and are preferably designed as square tubes.

4. Cutting machine according to any of Claims 1 to 3, characterized in that the locking device consists of a clamping plate (50) rigidly attached to the machine frame (10) with a guide slot (52) for a bolt (54) screwed into a threaded hole in the guide frame (14).

5. Cutting machine according to any of Claims 1 to 4, characterized in that the guide frame (14) can be tilted by means of a linear or step motor, preferably program-controlled.

6. Cutting machine according to any of Claims 1 to 5, characterized in that the axis (A) of the swivelling part (30) of the support table (26) can be unhinged.

7. Cutting machine according to any of Claims 1 to 6, characterized in that the swivelling part (30) of the support table (26) lies on a connecting strip (36) of the machine frame (10) via a height-adjustable support foot (34).

8. Cutting machine according to any of Claims 1 to 7, characterized in that guide tubes (56, 58) are rounded in relation to their cross-section on two opposing sides, the horizontal guide tubes (56) in the direction of the plane of the cutting disc (16) and the vertical guide tubes (58) in the direction of the drive shaft (22) of the cutting disc (16), where the distance (a) between the two apexes (86) is greater than the greatest diameter (2r) of the rounded parts (84) and the guide rollers (76) lie play-free in pairs on the rounded parts (84) of the guide tubes (56, 58), symmetrically and tangential in relation to the central longitudinal plane (E), with an axial angle (α) of 60 - 120°, preferably approximately 90°.

9. Cutting machine according to Claim 8, characterised in that the rounded parts (84) of the guide tubes (56, 58) are semi-circular in cross section with a radius (r) and the two rounded parts (84) of the guide tubes (56, 58) preferably merge into two parallel flat side surfaces (88).

10. Cutting machine according to Claim 8 or Claim 9, characterised in that the distance (a) between the apexes (86) corresponds at least to twice the greatest diameter (2r) of the rounded parts (84).

11. Cutting machine according to any of Claims 8 to 10, characterised in that the guide tubes (56, 58) have internal reinforcing struts (90, 92) or consist of two tubes (96) circular in cross section, with a connecting profile (98).

12. Cutting machine according to any of Claims 8 to 11, characterised in that the horizontal and/or vertical guide tubes (56, 58) are arranged in pairs, where preferably one of the two pairs of guide rollers (76) of a roller set is replaced by a single guide roller (76) arranged on the central longitudinal plane (E).

## Revendications

1. Machine de coupe pour pièces (28) possédant au moins une surface plane, laquelle machine comprend un bâti de machine (10), un disque de tronçonneuse (16) entraîné au moteur, monté sur un châssis de guidage basculant (14), une table d'appui (26) en deux parties pour la pièce (28), qui comprend une partie (30) qui peut pivoter sous l'action du mouvement de basculement du châssis de guidage (14) autour d'un axe (A) qui s'étend parallèlement au plan du disque de tronçonneuse (16) et qui peut coulisser dans la direction horizontale, et un dispositif de verrouillage pour le mouvement de basculement et de pivotement, cependant que le mouvement de basculement du châssis de guidage (14) peut être transmis par l'intermédiaire de deux biellettes élévatrices (32) qui font saillie en porte-à-faux rigidement et perpendiculairement à ce châssis et qui sont reliées de façon articulée à la partie pivotante (30) de la table d'appui (26),
caractérisée en ce que
la partie (42) de la table d'appui (26) qui se trouve entre le disque de tronçonneuse (16) et le châssis de guidage (14) est montée rigidement et que, dans la position horizontale de la partie pivotante (30), elle se trouve dans le même plan que celle-ci, les biellettes élévatrices (32) se trouvant aux deux extrémités des côtés frontaux de la partie fixe (42) de la table d'appui (26) dans la position horizontale et le dispositif de verrouillage bloquant le châssis de guidage sur le bâti de la machine.

2. Machine de coupe selon la revendication 1, caractérisée en ce que l'axe (A) de la partie pivotante (30) de la table d'appui (26) peut coulisser dans des fentes de guidage horizontales (46) sur des chariots ou équivalents coulissants ou roulants à l'horizontale, l'axe (A) se trouvant toujours dans un plan parallèle au plan du disque de tronçonneuse (16).

3. Machine de coupe selon la revendication 1 ou 2, caractérisée en ce que, pour la transmission du mouvement de basculement, les biellettes élévatrices (32) sont soudées au châssis de guidage (14) ou boulonnées à ce châssis, ou encore emboîtées sur ce châssis ou emmanchées dans ce châssis et, de préférence constituées par des tubes carrés.

4. Machine de coupe selon une des revendications 1 à 3, caractérisée en ce que le dispositif de verrouillage est constitué par une plaque de blocage (50) fixée rigidement au bâti (10) de la machine, et comprenant une fente de guidage (52) pour une vis (54) qui se visse dans un perçage fileté du châssis de guidage (14).

5. Machine de coupe selon une des revendications 1 à 4, caractérisée en ce que le châssis de guidage (14) peut être basculé au moyen d'un moteur linéaire ou pas-à-pas, de préférence commandé par programme.

6. Machine de coupe selon une des revendications 1 à 5, caractérisée en ce que l'axe (A) de la partie pivotante (30) de la table d'appui (26) est décrochable.

7. Machine de coupe selon une des revendications 1 à 6, caractérisée en ce que la partie pivotante (30) de la table d'appui (26) repose sur une barre de liaison (36) du bâti (10) de la machine avec interposition d'un pied d'appui (34) réglable en hauteur.

8. Machine de coupe selon une des revendications 1 à 7, caractérisée en ce que les tubes de guidage (56, 58) sont des tubes de guidage horizontaux (56) ronds en section transversale sur deux côtés opposés parallèlement au plan du disque de tronçonneuse (16) et des tubes de guidage verticaux (58) ronds en section transversale sur deux côtés opposés parallèlement à l'arbre d'entraînement (22) du disque de tronçonneuse (16), l'écartement (a) des deux crêtes (86) étant supérieur au diamètre maximum (2r) des arrondis (84), et des galets de guidage (76) reposent sans jeu tangentiellement sur les arrondis (84) des tubes de guidage (56, 58), symétriquement par paires, leurs axes formant un angle (α) de 60 à 120° avec le plan longitudinal médian (E).

9. Machine de coupe selon la revendication 8, caractérisé en ce que les arrondis (84) des tubes de guidage (56, 58) sont réalisés avec une section transversale semi-circulaire de rayon (r) et les deux arrondis (84) des deux tubes de guidage (56, 58) se terminent de préférence par deux surfaces latérales planes parallèles (88).

10. Machine de coupe selon la revendication 8 ou 9, caractérisée en ce que la distance d'écartement (a) des crêtes (86) correspond au moins au double du diamètre maximum (2r) des arrondis (84).

11. Machine de coupe selon une des revendications 8 à 10, caractérisée en ce que les tubes de guidage (56, 58) renferment des voiles de renforcement intérieur (90,92) ou sont composés de deux tubes (96) de section circulaire avec un profilé de liaison (98).

12. Machine de coupe selon une des revendications 8 à 11, caractérisée en ce que les tubes de guidage horizontaux et/ou verticaux (56, 58) sont disposés par paires, une des deux paires de galets de guidage (76) d'un jeu de galets étant de préférence remplacée par un unique galet de guidage (76) disposé dans le plan longitudinal médian (E).
